# EUROPEAN PATENT APPLICATION

(11) **EP 4 776 505 A1**
(43) Date of publication of application: **15.07.2026**
(21) Application number: 23951138.9
(22) Date of filing: 06.09.2023
(51) Int. Cl.: H02N 11/00

(54) **BRAND-NEW ELECTRICITY GENERATION METHOD**

(71) Applicant: Beijing Juechen Technology Co., Ltd., Beijing 101407 (CN); Guangzhou Institute of Blue Energy, Guangzhou, Guangdong 510555 (CN); Wang, Jue, Beijing 101407 (CN)
(72) Inventor: WANG, Jue, Beijing 101407 (CN)
(74) Representative: Gruner, Leopold Joachim
(86) International application number: PCT/CN2023/117170
(87) International publication number: WO 2025/050311

(57) **Abstract**

The present invention provides a brand-new power generation method. It is a method of generating electricity without magnetic induction, which does not require the addition of ferromagnetism or magnets. It generates induced current by using a coil to cut the electric field or electromagnetic field in the environment, belonging to the technical field of power generation. This method consists of an energy field generation device and a coil. The energy source of the energy field generation device can come from any one of electrical energy, light energy, thermal energy or wind energy, and it can directly or indirectly generate an electric field or electromagnetic field. By rotating the coil or the energy field generation device, the coil and the energy field generation device can produce relative motion, causing the coil to cut the electromagnetic field lines. Thus, induced current and induced electromotive force can be generated within the coil. This method is simple and practical, with a wide range of applications. It can convert various forms of energy fields into electrical energy and is suitable for the development of new energy sources, energy recovery and effective reuse. It will have an immeasurable impact on power generation technology, the effective utilization of energy and classical physics. This research belongs to a brand-new power generation technology in the field of new energy. Just like Faraday's discovery of electromagnetic induction in the past, it is a completely new method of converting non-magnetic energy into electricity.

## Description

### FIELD OF THE INVENTION

The present invention relates to the field of power generation technology, particularly to a brand-new power generation technology.

### BACKGROUND OF THE INVENTION

Common power generation methods include thermal power generation, hydropower generation, nuclear power generation, wind power generation and tidal power generation. All these power generation methods need to use electromagnetic generators to convert mechanical energy into electrical energy. Although they utilize various energy sources, their essence is all electromagnetic power generation. Due to the inability to do without magnets, the entire power generation process is complex in technology and cumbersome in procedures. Among them, the electromagnetic generator mainly utilizes the principle of electromagnetic induction. When a conductor is placed in a constantly changing magnetic field, it cuts the magnetic field lines and thus generates an induced current. The phenomenon of electromagnetic induction was discovered by Faraday in 1831. This discovery promoted the utilization of electricity and the generation of generators, and had a significant impact on the development of social productivity.

People's traditional thinking has always held that the coil cutting the magnetic field lines can generate induced current. After more than two hundred years of development, the electromagnetic generator has gradually become a key power generation equipment adopted in power stations, but it has also limited people's exploration of new power generation methods. There are a large number of energy fields in life, including electrical energy, light energy, thermal energy and wind energy, etc. These energy fields have long been ignored and wasted by people, due to the lack of effective utilization methods. The present invention provides a brand-new power generation method, it only needs an energy field generating device (such as electrical energy, light energy, thermal energy, wind energy and nuclear energy fields) that directly or indirectly generates an electric field or changes the electric field and a coil, which does not require magnets. By rotating the coil or the energy field generation device, the coil cuts the electric field or electromagnetic field lines (Electra-electric induction), and an induced current and induced electromotive force can be generated within the coil, thus achieving the power generation function. This method does not require additional magnets and a power generation method of Electra-electric induction. It breaks through the traditional electromagnetic power generation, is simple and practical, and is suitable for the development of new energy, energy recovery and effective reuse. It will have an immeasurable impact in the field of power generation technology.

### SUMMARY OF THE INVENTION

The technical problem to be solved by the present invention is to provide a brand-new power generation method, which is an electro-induction method. This method consists of an energy field generation device and a coil. The energy field (electrical energy, light energy, thermal energy, wind energy and nuclear energy) generation device can directly or indirectly generate an electric field or electromagnetic field. By rotating the coil or the energy field generation device, the coil and the energy field generation device can produce relative motion, causing the coil to cut the electromagnetic field lines. Thus, induced current and induced electromotive force can be generated within the coil.

Maxwell's equations establishes that changing electric fields and changing magnetic fields are not isolated from each other but are closely related, stimulating each other and forming a unified electromagnetic field as a whole. The unified electromagnetic theory holds that the electric field is the magnetic field and the magnetic field is the electric field. However, it is believed that it has always been known that a coil cutting magnetic field lines can generate an induced current, but it has never been realized that a coil cutting electric field lines can also generate an induced current. Therefore, it is impossible to better understand that an electric field is a magnetic field and a magnetic field is an electric field. In 2019, the latest cutting-edge discovery was made that any matter colliding, rubbing, or coming into contact with each other will generate an electromagnetic field - that is the "magnetic collision theory" : when all things collide with each other, an electromagnetic field will be produced. Constant friction and collision will generate a changing electric field, and the changing electric field produces Maxwell displacement current. (1) Wherever there is a dynamic touch, there is electromagnetic field-a discovery for power generation. Nano Energy, 2020, 78: 105314. (2) Power generation by contact and the potential applications in new energy. Nano Energy, 2021, 87: 106167. (3) From light powered by knocking on the door to the investigation on three types of collision. Nano Energy, 2021, 81: 105652. (4) An easy and efficient power generator with ultrahigh voltage for lighting, charging and self-powered systems. Nano Energy, 2022,100: 107409. (5) New insights into Maxwell's equations based on new experimental discoveries, Composites Communications, https://doi.org/10.1016/j.coco.2023.101552.

The latest research has found that when a coil cuts electric field lines, an induced current will be generated. When light energy, thermal energy and wind energy are applied, the collision speed, intensity and probability of the surrounding environment or objects (including their own molecules) will increase, thus the electromagnetic energy will increase, the electromagnetic field lines generated by the coil cutting will increase, and the induced current and induced electromotive force generated in the coil will increase. This represents a truly new discovery --an completely orignal innovation.

A brand-new power generation method includes an energy field generation device and a coil. The energy field (electrical energy, light energy, thermal energy, wind energy and nuclear energy) generation device can directly or indirectly generate an electric field or electromagnetic field. By rotating the coil or making the energy field generation device move, the coil and the energy field generation device move relatively, causing the coil to cut the electric field lines or electromagnetic field lines. Thus, induced current and induced electromotive force can be generated within the coil.

The energy field generation device can be an indirect electric field (electromagnetic field) generation device. The indirect electric field (electromagnetic field) generation device can be a light source, which can be a natural light source such as the sun or stars, or an artificial light source such as fluorescent lamps, incandescent lamps, or torches. The light source itself is an electromagnetic field. Light exposure simultaneously leads to the generation of more electromagnetic fields (the latest discovery shows that light illumination can increase the collisions between particles and molecules in the environment, these collisions generate electromagnetic fields, leading to a corresponding increase in electromagnetic energy). The coil constantly moves relatively in the electromagnetic field caused by light exposure, causing the coil to continuously cut the electromagnetic field lines, thereby generating induced current and induced electromotive force within the coil. When a coil moves continuously relative to the electromagnetic field generated by light illumination, it continually cuts through the electromagnetic field lines. As a result, an induced current and an induced electromotive force are generated within the coil.

The light source can be equipped with a focusing device. The focusing device can enhance the intensity of the illumination, thereby generating more electromagnetic fields. The energy field generation device can be an indirect electric field (electromagnetic field) generation device. This indirect electric field (electromagnetic field) generation device can be a heat source. The heat source may be any device capable of generation thermal energy, including a combustion-based heat device, an electric current-based heat device, a friction-based heat generation device, a chemical reaction-based heat generation device, a dissolution-based heat generation device, and so on. As long as the temperature increases, it can lead to more frequent collisions among objects, particles, and molecules either inside the device itself or in the vicinity of the coil. These collisions generate electromagnetic fields, resulting in a corresponding increase in electromagnetic energy. As the coil continuously cuts through the electromagnetic field lines, induced currents and induced electromotive forces are generated within the coil. Moreover, the induced current increases with rising temperature.

The energy field generation device can be an indirect electric field (electromagnetic field) generation device, and this indirect electric field (electromagnetic field) generation device may be wind energy - such as natural wind, a blower, a fan, or any device capable of generation wind energy. When the wind blows, it causes an increase in the collisions among particles and molecules around the coil. These collisions generate electromagnetic fields, leading to a corresponding increase in electromagnetic energy. As the coil continuously cuts through the electromagnetic field lines, induced currents and induced electromotive forces are generated within the coil. Moreover, the induced current increases with the strength of the wind.

The energy field generation device can be an indirect electric field (electromagnetic field) generation device. This indirect electric field (electromagnetic field) generation device may be a nuclear energy generation device, such as a nuclear reactor, or even a nuclear waste device. Nuclear radiation is capable of producing extremely strong electromagnetic fields. By using a coil to continuously cut through the electromagnetic field lines generated by nuclear radiation, induced currents and induced electromotive forces can be generated within the coil. This approach not only enables the continuous extraction of electrical energy, but also turns nuclear waste into a valuable resource, achieving sustainable power generation from what was previously considered hazardous material.

The coil can be made of one or more types of metals or alloys, such as copper, iron, aluminum, or others.

The shape of the coil can be circular, square, triangular, pentagonal, or any other shape.

The coil can consist of a single group of coils or multiple groups of coils.

Multiple groups of coils can be connected in series or in parallel.

The method of achieving relative motion between the coil and the energy field generation device can include rotation, sliding, rolling, or other forms of movement. The power source for this motion can be mechanical energy derived from various sources, such as wind energy, water energy, human kinetic energy, and others.

Compared to the prior art, the technical solution disclosed herein provides the following advantages.

In the above-mentioned scheme, as long as the coil or the energy field generation device is rotated to make the coil and the energy field generation device move relatively, causing the coil to cut the electromagnetic field lines, thereby generating induced current and induced electromotive force within the coil. This method is simple, practical, and widely applicable. It can convert various forms of energy fields into electrical energy, and is expected to have an immeasurable impact on power generation technology, the efficient utilization of energy, and classical physics. This research represents a brand-new power generation technology in the field of new energy. Just as Faraday's discovery of electromagnetic induction revolutionized the understanding of electricity, this approach introduces a completely new method of converting energy fields into electricity without relying on traditional magnetic induction, marking a significant innovation in the field.

### BRIEF DESCRIPTION OF THE DRAWINGS

FIG. 1 is a schematic diagram of the device structure of a brand-new power generation method of the present invention, according to the first embodiment.
FIG. 2 is a schematic diagram of the device structure of a brand-new power generation method of the present invention, according to the second embodiment.
FIG. 3 is a schematic diagram of the device structure of a brand-new power generation method of the present invention, according to the third embodiment.
FIG. 4 is a schematic diagram of the device structure of a brand-new power generation method of the present invention, according to the fourth d embodiment.
FIG. 5 is a schematic diagram of the device structure of a brand-new power generation method of the present invention, according to the fifth embodiment.
FIG. 6 is a schematic diagram of the device structure of a brand-new power generation method of the present invention, according to the sixth embodiment.
FIG. 7 is a schematic diagram of the device structure of a brand-new power generation method of the present invention, according to the seventh embodiment.
FIG. 8 is a schematic diagram of the device structure of a brand-new power generation method of the present invention, according to the eighth embodiment.
FIG. 9 is a schematic diagram of the device structure of a brand-new power generation method of the present invention, according to the ninth embodiment.
FIG. 10 is a schematic diagram of the device structure of a brand-new power generation method of the present invention, according to the tenth embodiment.
FIG. 11 is a schematic diagram of the device structure of a brand-new power generation method of the present invention, according to the eleventh embodiment.
FIG. 12 is a schematic diagram of the device structure of a brand-new power generation method of the present invention, according to the twelfth embodiment.
FIG. 13 is a schematic diagram of the device structure of a brand-new power generation method of the present invention, according to the thirteenth embodiment.
FIG. 14 is a schematic diagram of the device structure of a brand-new power generation method of the present invention, according to the fourteenth embodiment.
FIG. 15 is an output current data diagram of a brand-new power generation method of the present invention, according to the first embodiment.
FIG. 16 is an output voltage data diagram of a brand-new power generation method of the present invention, according to the first embodiment.
FIG. 17 is a diagram of lighting a 1 Watt bulb by a brand-new power generation method of the present invention, according to the eighth embodiment.
FIG. 18 is an output current data diagram of a brand-new power generation method of the present invention, according to the sixth embodiment.
FIG. 19 is an output voltage data diagram of a brand-new power generation method of the present invention, according to the sixth embodiment.
Figure 20 is a diagram of lighting a 28Watt fluorescent tube by a brand-new power generation method of the present invention, according to the eighth embodiment.
FIG. 21 is an output current data diagram of a brand-new power generation method of the present invention, according to the ninth embodiment.
FIG. 22 is an output voltage data diagram of a brand-new power generation method of the present invention, according to the ninth embodiment.
FIG. 23 is an output current data diagram of a brand-new power generation method of the present invention, according to the tenth embodiment.
FIG. 24 is an output voltage data diagram of a brand-new power generation method of the present invention, according to the tenth embodiment.
FIG. 25 is an output current data diagram of a brand-new power generation method of the present invention, according to the eleventh embodiment.
FIG. 26 is an output voltage data diagram of a brand-new power generation method of the present invention, according to the eleventh embodiment.
FIG. 27 is an output current data diagram of a brand-new power generation method of the present invention, according to the twelfth embodiment.
FIG. 28 is an output voltage data diagram of a brand-new power generation method of the present invention, according to the twelfth embodiment.
FIG. 29 is an output current data diagram of a brand-new power generation method of the present invention, according to the thirteenth embodiment.
FIG. 30 is an output voltage data diagram of a brand-new power generation method of the present invention, according to the thirteenth embodiment.

The attached figure is marked as:1, ionization ball; 2, the coil; 3, hand; 4, rotating shaft;5, wire; 6, one Watt light bulb; 7, power socket; 8, fur; 9, rubber rod; 10, fluorescent tube; 11, polymethyl methacrylate plate; 12, constant temperature heating platform; 13, chemical reaction-based heating device; 14, ultraviolet lamp; 15, natural wind;16, high-voltage power tower; 17, windmill; 18, nuclear waste that generates nuclear radiation electromagnetic fields.

### DETAILED DESCRIPTION OF PREFERRED EMBODIMENTS

To better illustrate the technical problems addressed, solutions proposed, and advantages achieved by the present invention, the following describes in detail with reference to the accompanying drawings and specific embodiments. It should be understood that these implementations are provided solely to explain and demonstrate the invention, not to limit its scope.

The following is a detailed description of a brand-new power generation method. The present invention provides a brand-new power generation method, including an energy field generation device and a coil. The energy field (electrical energy, light energy, thermal energy, wind energy and nuclear energy) generation device can directly or indirectly generate an electric field or electromagnetic field. By rotating the coil or rotating the energy field generation device, the coil and the energy field generation device can produce relative motion. This prompts the coil to cut through the electromagnetic field lines, thereby enabling the generation of induced current and induced electromotive force within the coil.

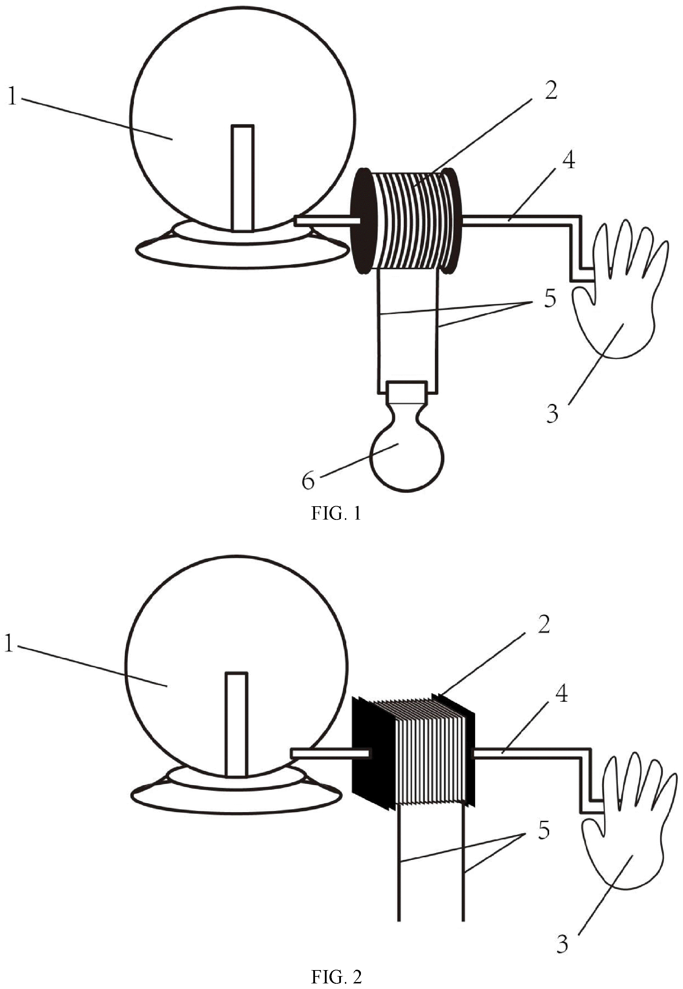

Figure 1-14 shows the implementation of a brand-new power generation method, including an energy field generation device and a coil.

Optionally, the direct electric field generation device or the electromagnetic field generation device can be an ionizing radiation electric field generation device, an electrostatic induction generation device, an external electric field generation device, a leakage field generation device, a high-voltage electrostatic field generation device, a power source for generating a radiated electric field or a leakage field, or a device for generating a changing electric field or electrostatic field through friction. It can be any device that can generate an electrostatic field or change an electric field, such as a temperature difference generator that produces a spatial electric field.

Optionally, the indirect electric field generation device or the indirect electromagnetic field generation device can be a light source, which can be a natural light source or an artificial light source. The light source itself is an electromagnetic field, and the illumination simultaneously causes more electromagnetic fields to be generated.

Optionally, the indirect electric field generation device or the indirect electromagnetic field generation device can be wind energy, natural wind, a blower, a fan, or any device capable of generation wind energy.

Optionally, the energy field generation device for generation light energy can be a natural light source such as the sun or stars, or an artificial light source such as fluorescent lamps, incandescent lamps, or torches.

Optionally, the energy field generation device for generation thermal energy can be a fire source or any device capable of generation thermal energy, including a combustion-based heat device, an electric current-based heat device, a friction-based heat generation device, a chemical reaction-based heat generation device, a dissolution-based heat generation device, and so on.

Optionally, the nuclear energy generation device can be a nuclear reactor device or a nuclear waste device.

Optionally, the coil can be made of one or more types of metals or alloys, such as copper, iron, aluminum, or others.

Optionally, the shape of the coil can be circular, square, triangular, pentagonal, or any other shape.

Optionally, the coil can consist of a single group of coils or multiple groups of coils. Optionally, multiple groups of coils can be connected in series or in parallel.

The following is illustrated in combination with specific implementation examples.

### The first embodiment

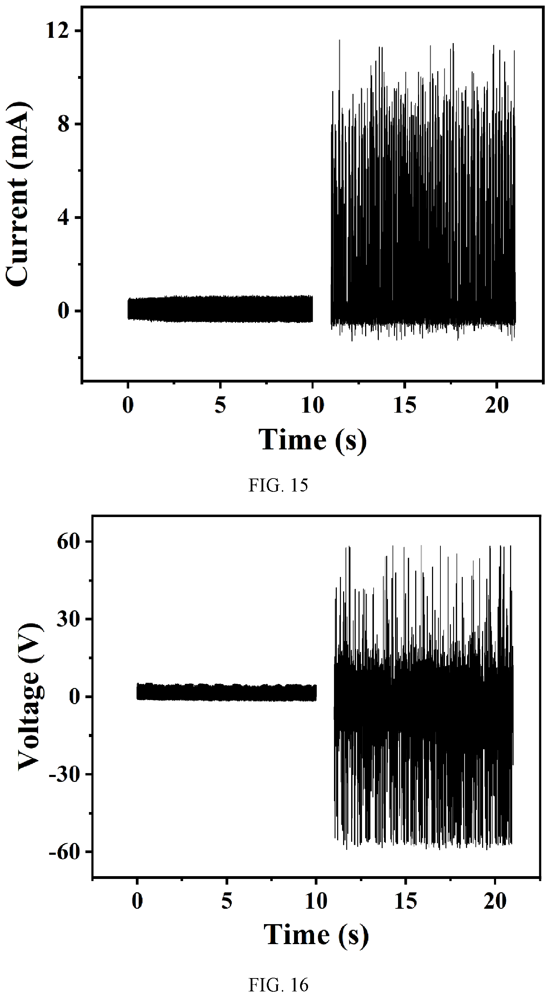

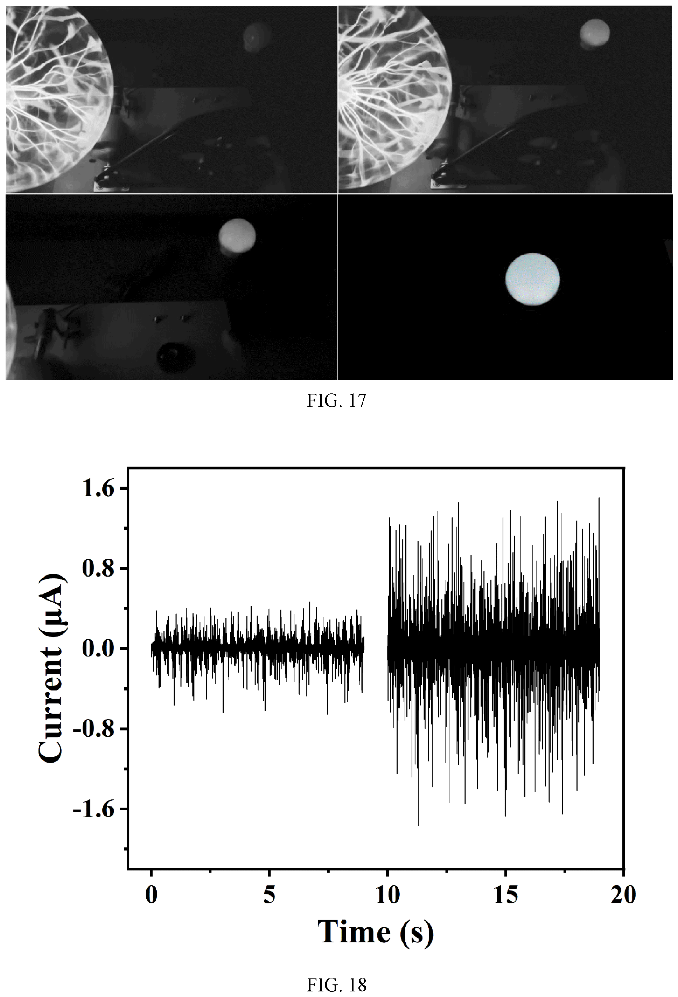

As shown in figure 1, a brand-new power generation method in this embodiment includes: an energy field generation device and a coil. The energy field generation device selects an ionization ball 1 with a power of 8 Watt and a volume of L125mm * W125mm * H200mm. The coil 2 uses a 300-turn circular copper wire coil with a diameter of 0.5mm. The rotating shaft 4 is driven to rotate by hand crank 3 at a speed of 3r/s, allowing the coil 2 and the energy field generation device 1 to move relatively. This prompts the coil to cut the electromagnetic field lines, thereby enabling the generation of induced current and induced electromotive force within the coil and their discharge through the wire 5. The specific output data of the rotating coil before and after the addition of the energy field generation device are shown in figure 15-16, and the output current increases from 0.6 mA to 10.32 mA. When the output voltage rised from 5.0 V to 58.7 V, it can light up a 1Watt bulb 6, as shown in figure 17.

### The second embodiment

As shown in figure 2, a brand-new power generation method in this embodiment includes: an energy field generation device and a coil. The energy field generation device selects an ionization ball 1 with a power of 8 Watt and a volume of L125mm * W125mm * H200mm. The coil 2 uses a 300-turn square aluminum wire coil with a diameter of 0.5mm. The rotating shaft 4 is driven to rotate by hand crank 3 at a speed of 3r/s, allowing the coil 2 and the energy field generation device 1 to move relatively. This prompts the coil to cut the electromagnetic field lines, thereby enabling the generation of induced current and induced electromotive force within the coil and their discharge through the wire 5.

### The third embodiment

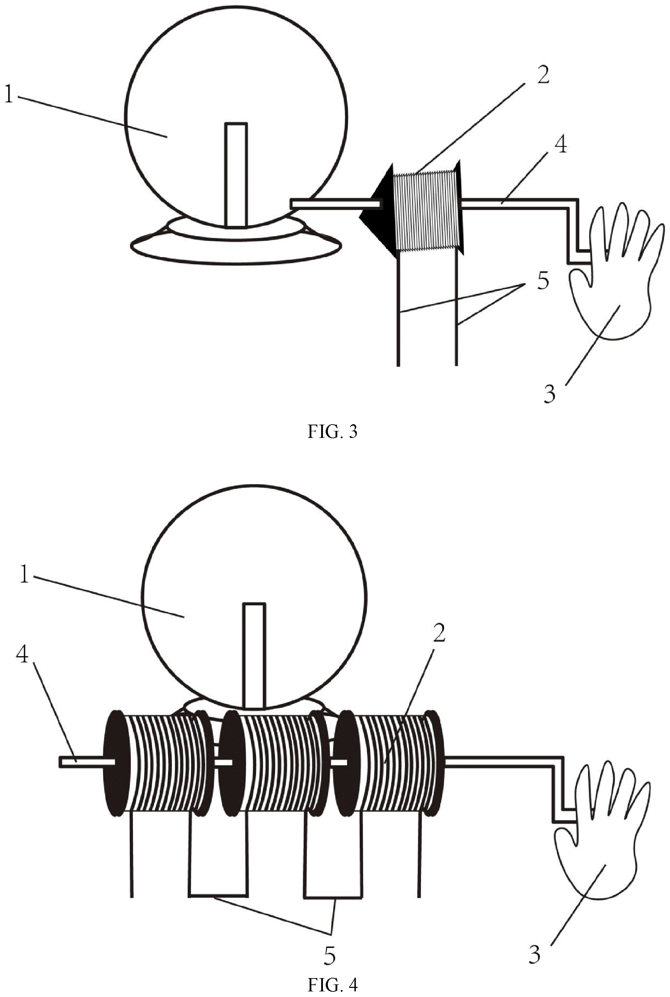

As shown in figure 3, a brand-new power generation method in this embodiment includes: an energy field generation device and a coil. The energy field generation device selects an ionization ball 1 with a power of 8 Watt and a volume of L125mm * W125mm * H200mm. The coil 2 selects a 300-turn triangular alloy coil with a wire diameter of 0.5mm. The rotating shaft 4 is driven to rotate by hand crank 3 at a speed of 3r/s, allowing the coil 2 and the energy field generation device 1 to move relatively. This prompts the coil to cut the electromagnetic field lines, thereby enabling the generation of induced current and induced electromotive force within the coil and their discharge through the wire 5.

### The fourth embodiment

As shown in figure 4, a brand-new power generation method in this embodiment includes: an energy field generation device and a coil. The energy field generation device selects an ionization ball 1 with a power of 8 Watt and a volume of L125mm * W125mm * H200mm. The coil 2 selects three sets of 300-turn circular copper wire coils with a diameter of 0.5mm, which are connected in series. The rotating shaft 4 is driven to rotate by hand crank 3 at a speed of 3r/s. Making the coil 2 and the energy field generation device 1 move relatively, causing the coil to cut through the electromagnetic field lines, thereby generating induced current and induced electromotive force within the coil and conducting them out through the wire 5.

### The fifth embodiment

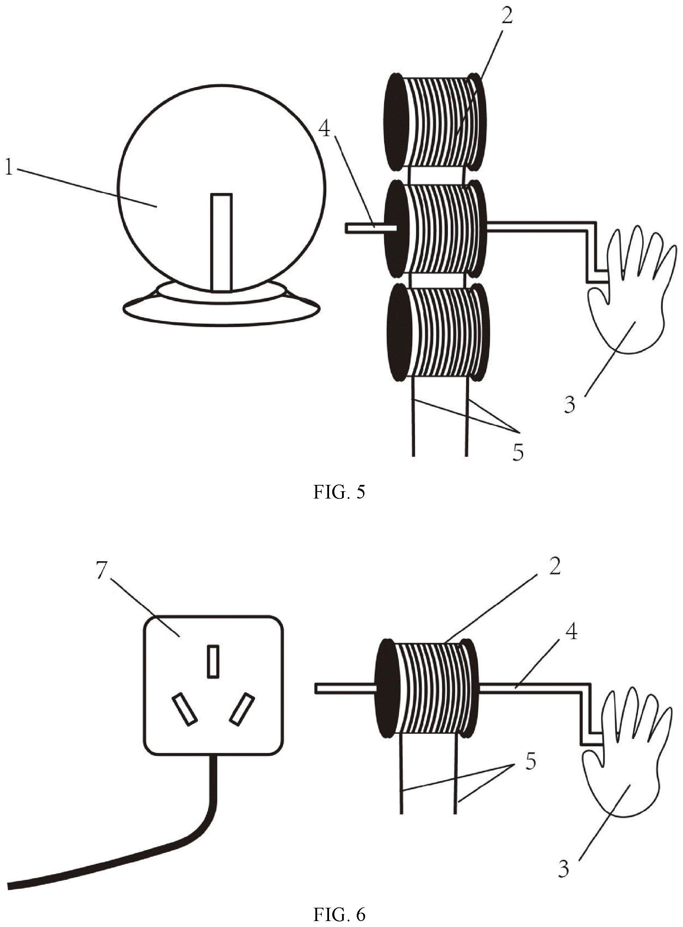

As shown in Figure 5, a brand-new power generation method in this embodiment includes: an energy field generation device and a coil. The energy field generation device selects an ionization ball 1 with a power of 8 Watt and a volume of L125mm * W125mm * H200mm. The coil 2 selects three sets of 300-turn circular copper wire coils with a diameter of 0.5mm, which are connected in parallel. The rotating shaft 4 is driven to rotate by hand crank 3 at a speed of 3r/s. Making the coil 2 and the energy field generation device 1 move relatively, causing the coil to cut through the electromagnetic field lines, thereby generating induced current and induced electromotive force within the coil and conducting them out through the wire 5.

### The sixth embodiment

As shown in Figure 6, a brand-new power generation method in this embodiment includes: an energy field generation device and a coil. The energy field generation device selects a power socket 7 for generating an electrical energy field with a power of 2200 W. The coil 2 uses a 300-turn copper wire coil with a diameter of 0.5 mm. It is driven by a hand crank 3 to rotate the shaft 4 at a speed of 3r/s, causing the coil 2 and the energy field generation device 7 to move relatively, which prompts the coil to cut the electromagnetic field lines. Thus, induced current and induced electromotive force can be generated within the coil and conducted out through wire 5. The specific output data of the rotating coil before and after the addition of the energy field generation device are shown in figure 18-19, and the output current increases from 0.36 mA to 1.36 mA. The output voltage rosed from 1.82 V to 3.81 V.

### The seventh embodiment

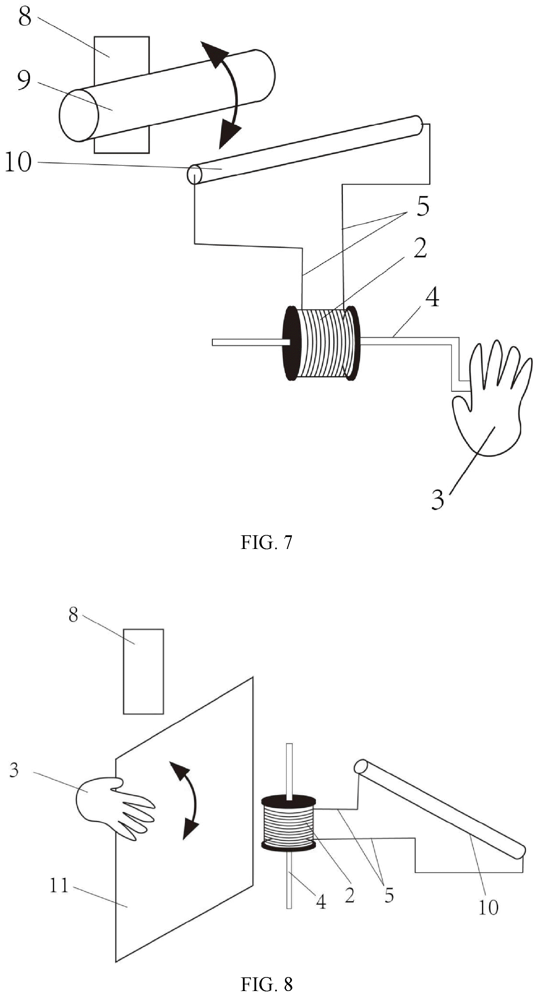

As shown in figure 7, a brand-new power generation method in this embodiment includes: an energy field generation device and a coil. The energy field generation device selects a rubber rod 9 that has been rubbed with fur 8. The fur 8 is made of rabbit hair with a diameter of 20*15 cm, and the rubber rod 9 has a diameter of 40 mm and a length of 500 mm. The coil 2 selects a 300-turn copper wire coil with a diameter of 0.5 mm. By shaking the rubber rod, the shaking amplitude is approximately 50 cm, and the swinging frequency is about 3 times per second. At the same time, hand crank 3 drives the rotating shaft 4 to rotate at a speed of 3 r/s, making coil 2 and the energy field generation device move relatively, causing the coil to cut the electromagnetic field lines. Thus, induced current and induced electromotive force can be generated within the coil and conducted out through wire 5, which can light up a 28Watt fluorescent tube lamp 10.

### The eighth embodiment

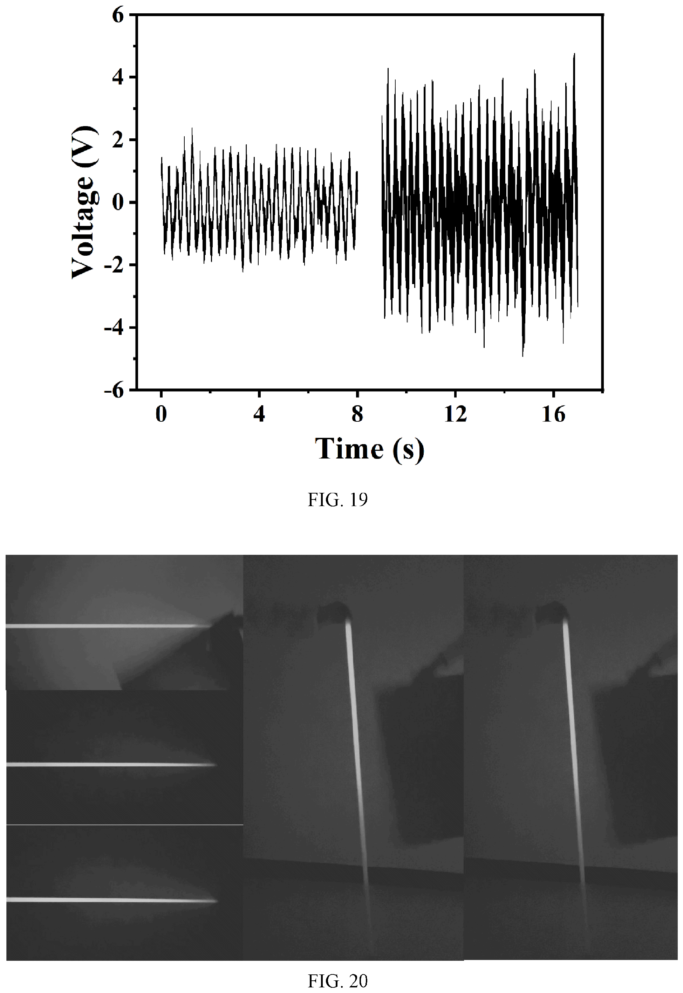

As shown in figure 8, a brand-new power generation method in this embodiment includes: an energy field generation device and a coil. The energy field generation device selects polymethyl methacrylate (PMMA) plates 11 rubbed with fur 8. The fur 8 is 100* 150mm rabbit fur. The thickness of the PMMA plate 11 is 3mm, the length is 300mm, the width is 200mm, the diameter is 40mm, and the length is 500mm. Swing the PMMA palte 11 left and right with hand 3, with a swing amplitude of approximately 50 cm and a swing frequency of about 3 times per second. This causes the coil 2 and the energy field generation device to move relatively, prompting the coil to cut the electromagnetic field lines. As a result, an induced current and induced electromotive force can be generated within the coil and discharged through the wire 5. It can also light up a 28 Watt fluorescent tube lamp 10, as shown in Figure 20.

### The ninth embodiment

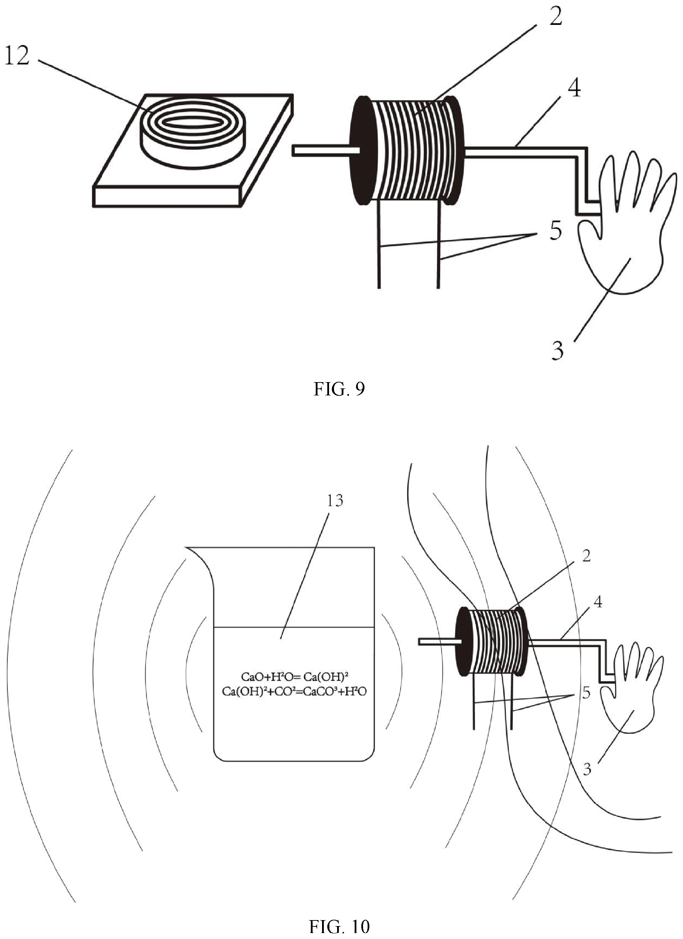

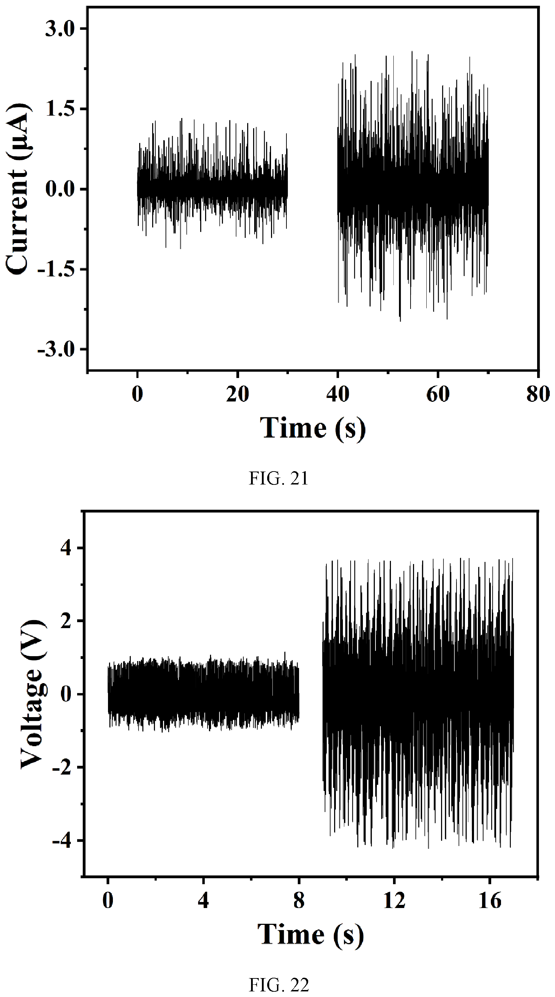

As shown in figure 9, a brand-new power generation method in this embodiment includes: an energy field generation device and a coil. The energy field generation device selects the constant temperature heating platform 12 of the indirect electric field generation device or the electromagnetic field generation device. The power of the heating platform is 1800 W, the external dimensions are 200*300*145 mm, the temperature is selected as 260°, the coil 2 selects a 300-turn copper wire coil with a diameter of 0.5 mm, and the rotating shaft 4 is driven to rotate by hand crank 3 at a speed of 3 r/s. Let the coil 2 and the energy field generation device 12 move relatively, causing the coil to cut through the electromagnetic field lines, thereby generating induced current and induced electromotive force within the coil and conducting them out through the wire 5. The specific output data of the rotating coil before and after the addition of the energy field generation device are shown in figures 21-22, and the output current increases from 1.26 mA to 2.46 mA. The output voltage rosed from 0.96 V to 3.6 V.

### The tenth embodiment

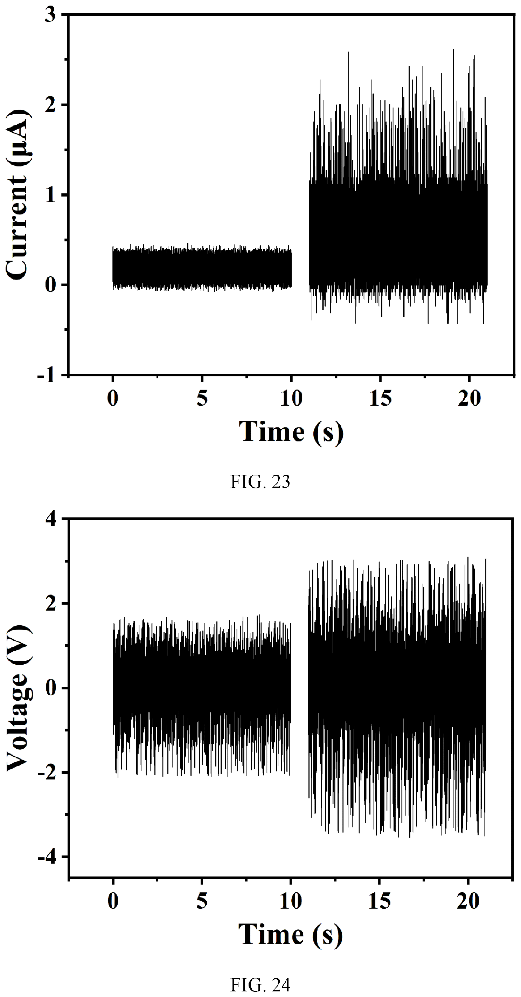

As shown in figure 10, a brand-new power generation method in this embodiment includes: an energy field generation device and a coil. The energy field generation device selects the chemical reaction-based heating device 13 that indirectly generates an electric field or electromagnetic field. The chemical reaction options are: CaO+H₂O=Ca(OH)₂, Ca(OH)₂+CO₂=CaCO₃+H₂O. The chemical reaction-based heating device 13 consists of 28 g of calcium oxide (Aladdin, 98%), 9 g of ultrapure water, and a 500 mL beaker. The coil 2 is made of 300 turns of copper wire with a diameter of 0.5 mm. After the reaction begins, the rotating shaft 4 is driven to rotate by hand crank 3 at a speed of 3r/s, allowing the coil 2 and the thermal energy field generation device 13 to move relatively. This prompts the coil to cut the electromagnetic field lines, thereby enabling the generation of induced current and induced electromotive force within the coil and their discharge through the wire 5. The specific output data is shown in figure 23-24. The output current increased from 0.42 mA to 2.53 mA. The output voltage rosed from 1.63 V to 3 V.

### The eleventh embodiment

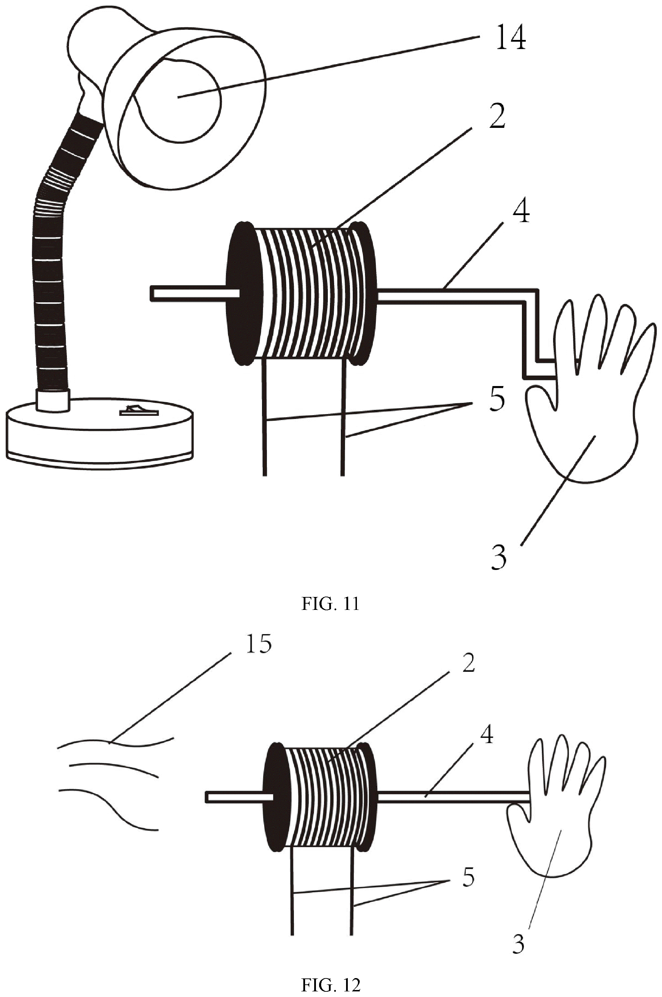

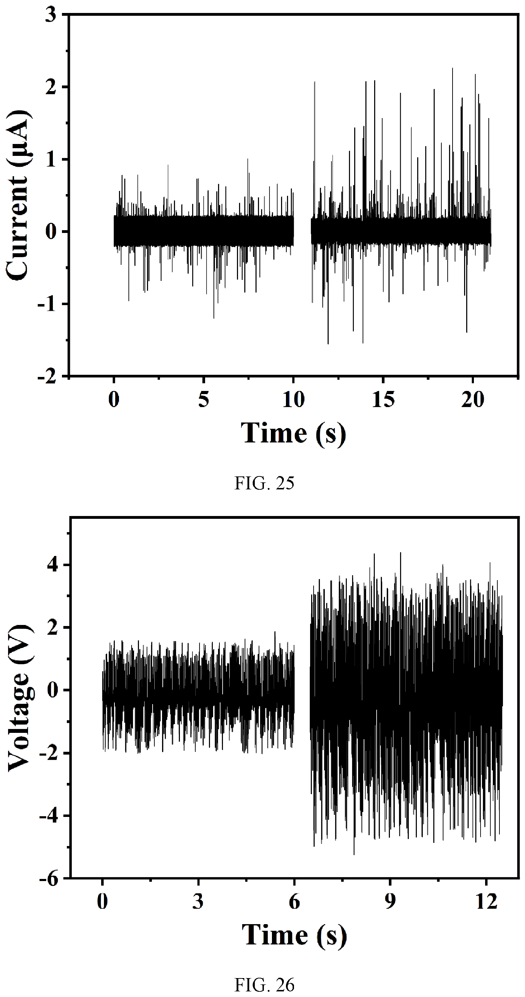

As shown in Figure 11, a brand-new power generation method in this embodiment includes: an energy field generation device and a coil. The energy field generation device selects the ultraviolet lamp 14 that indirectly generates an electric field or electromagnetic field. The power of the ultraviolet lamp is 8 Watt and the wavelength is 325 nm. The coil 2 selects a 300-turn copper wire coil with a diameter of 0.5mm. It is driven by hand crank 3 to rotate the shaft 4 at a speed of 3r /s, causing coil 2 and the light energy field generation device 14 to move relatively. This prompts the coil to cut the electromagnetic field lines, thereby generating an induced current and induced electromotive force within the coil and conducting them out through the wire 5. The specific output data of the rotating coil before and after the addition of the energy field generation device are shown in figures 25-26, and the output current increased from 0.64 mA to 2.10 mA. The output voltage rosed from 1.5 V to 3.6 V.

### The twelfth embodiment

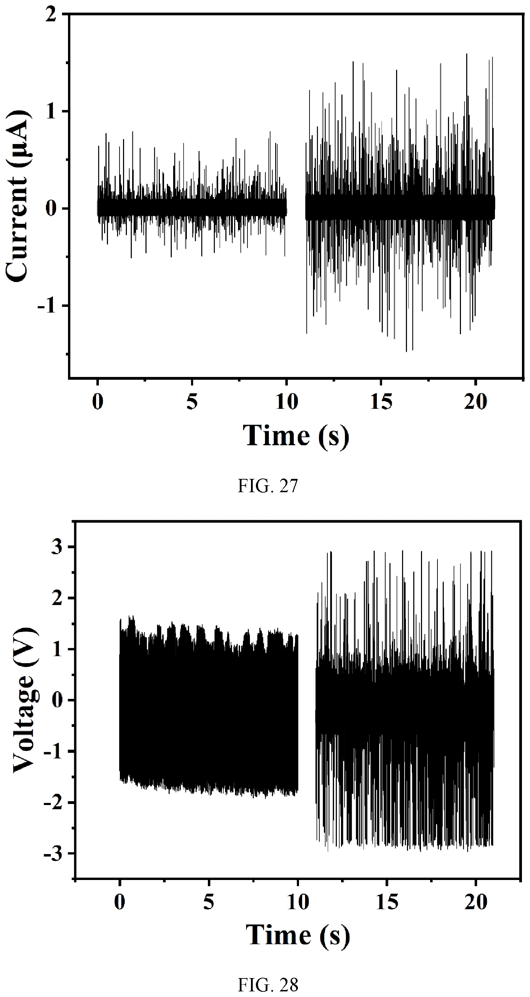

As shown in Figure 12, a brand-new power generation method in this embodiment includes: an energy field generation device and a coil. The energy field generation device selects natural wind 15, with a wind speed of approximately 3 m/s. The coil 2 selects a 300-turn copper wire coil with a diameter of 0.5 mm. The rotating shaft 4 is driven to rotate by hand crank 3 at a speed of 3r/s, causing the coil 2 and the wind energy field generation device 15 to move relatively. This prompts the coil to cut the electromagnetic field lines, thereby generating induced current and induced electromotive force within the coil and conducting them out through the wire 5. The specific output data is shown in figure 27-28, and the output current increased from 0.73 mA to 1.5 mA. The output voltage rosed from 1.4 V to 2.9 V.

### The thirteenth embodiment

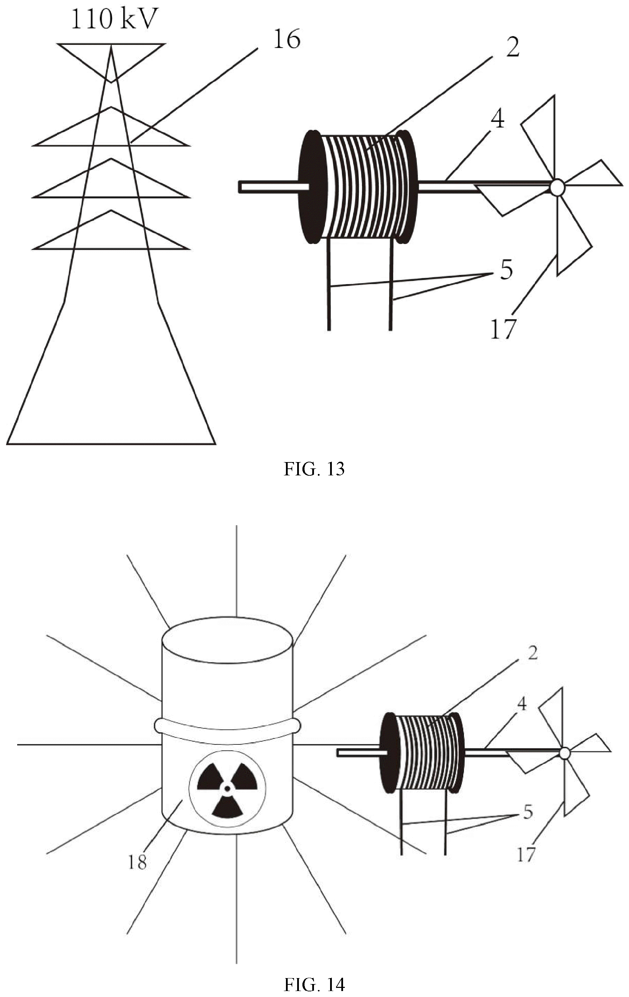

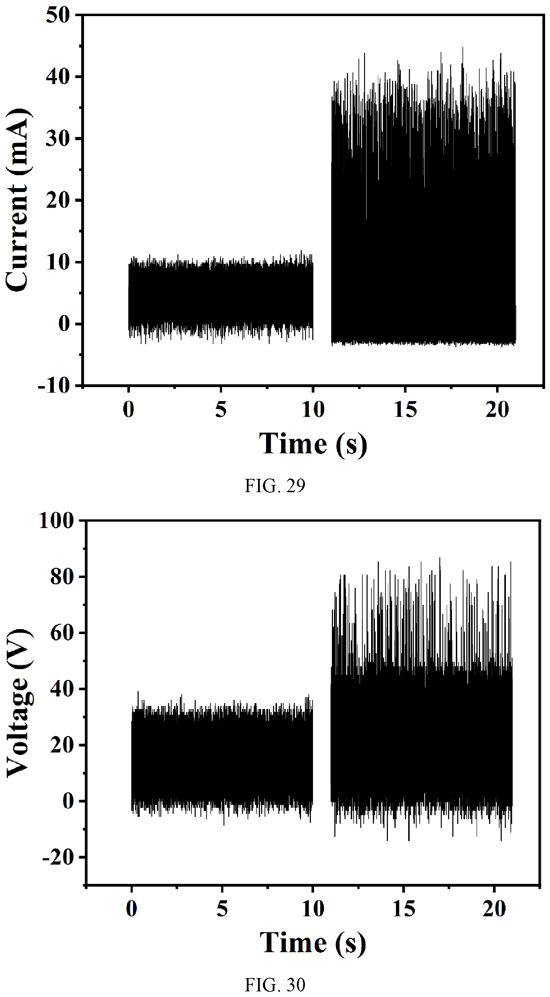

As shown in Figure 13, a brand-new power generation method in this embodiment includes: an energy field generation device and a coil. The energy field generation device selects a high-voltage power tower (110 kV) 16. A wind turbine 17 is placed within a safe range of 20 meters to drive the coil 2. The coil 2 is a 300-turn copper wire coil with a diameter of 0.5 mm. Under a gentle breeze, the windmill 17 rotates and drives the rotating shaft 4 to rotate at a speed of 3r/s, causing the coil 2 and the energy field generation device 16 to move relatively. This prompts the coil to cut the electromagnetic field lines, thereby generating an induced current and induced electromotive force within the coil and conducting them out through the wire 5. The specific output data is shown in figure 29-30, with the output current increased from 10.68 mA to 43.22 mA. The output voltage rosed from 36.29 V to 85.54 V.

### The fourteenth embodiment

As shown in figure 14, a brand-new power generation method in this embodiment includes: an energy field generation device and a coil. The energy field generation device selects a nuclear waste 18 that generates nuclear radiation electromagnetic fields. The nuclear waste 18 selects the remaining uranium-238 and other radioactive waste that are no longer needed. The coil 2 selects a 300-turn copper wire coil with a diameter of 0.5mm. Under a gentle breeze, the windmill 17 rotates and drives the rotating shaft 4 to rotate at a speed of 3r/s, causing the coil 2 and the energy field generation device 18 to move relatively. This prompts the coil to cut the electromagnetic field lines, thereby generating induced current and induced electromotive force within the coil and conducting them out through the wire 5.

The above description is the preferred embodiment of the present invention. It should be pointed out that for ordinary technicians in this technical field, several improvements and embellishments can be made without departing from the principles described in the present invention, and these improvements and embellishments should also be regarded as the protection scope of the present invention.

## Claims

1. A brand-new method of power generation, comprising:
an energy field generation device, the energy source of the energy field generation device comes from one of the following: electrical energy, light energy, thermal energy, wind energy and nuclear energy; the energy field generation device can directly or indirectly generate electric field or electromagnetic field; and
a coil, by rotating the coil or making the energy field generation device move, the coil and the energy field generation device move relatively, causing the coil to cut the electric field lines or electromagnetic field lines, thereby generating induced current and induced electromotive force within the coil.

2. The brand-new method of power generation according to claim 1, wherein the energy field generation device can be a direct electric field generation device or a direct electromagnetic field generation device, the direct electric field generation device or the direct electromagnetic field generation device can be an ionizing radiation electric field generation device, an electrostatic induction generation device, an externally applied electric field generation device, a leakage electric field generation device, a high-voltage electrostatic field generation device, a power source for generating a radiated electric field or a leakage electric field, or a device for generating a changing electric field or electrostatic field through friction; it can be any device that can generate an electrostatic field or change an electric field, such as a temperature difference generator that generates a spatial electric field.

3. The brand-new method of power generation according to claim 1, wherein the energy field generation device can be an indirect electric field generation device or an indirect electromagnetic field generation device, the indirect electric field generation device or the indirect electromagnetic field generation device can be a light source, the light source can be a natural light source or an artificial light source, the light source itself is an electromagnetic field, and the light simultaneously causes more electromagnetic fields to be generated (the latest discovery is that light can increase the collision of particles and molecules in the environment) the collision generates an electromagnetic field, and the corresponding electromagnetic energy increases, the coil constantly moves relatively in the electromagnetic field caused by the light, causing the coil to continuously cut the electromagnetic field lines, thereby generating induced current and induced electromotive force within the coil.

4. The brand-new method of power generation according to claim 3, wherein the light source can be a focusing device, and the focusing device can enhance the light, thereby generating more electromagnetic fields.

5. The brand-new method of power generation according to claim 1, wherein the energy field generation device can be an indirect electric field generation device or an indirect electromagnetic field generation device, and the indirect electric field generation device or the indirect electromagnetic field generation device can be a heat source; the heat source can be any device capable of generating thermal energy, comprising a combustion-based heat device, an electric current-based heat device, a friction-based heat generation device, a chemical reaction-based heat generation device, a dissolution-based heat generation device, as long as the temperature rises, It can increase the collision of objects, particles and molecules within the device itself or around the coil; the collision generates an electromagnetic field, and the corresponding electromagnetic energy increases; the coil constantly cuts the electromagnetic field lines, thereby generating induced current and induced electromotive force within the coil; moreover, the induced current increases with the rise in temperature.

6. The brand-new method of power generation according to claim 1, wherein the energy field generation device can be an indirect electric field generation device or an indirect electromagnetic field generation device; the indirect electric field generation device or the indirect electromagnetic field generation device can be wind energy, natural wind, a blower, a fan, or any device capable of generating wind energy; the wind blowing can increase the collision of particles and molecules around the coil, and the collision generates an electromagnetic field, which correspondingly increases the electromagnetic energy. The coil constantly cuts the electromagnetic field lines, thereby generating induced current and induced electromotive force within the coil, and the induced current increases with the increase of wind force.

7. The brand-new method of power generation according to claim 1, wherein the energy field generation device can be an indirect electric field generation device or an indirect electromagnetic field generation device; the indirect electric field generation device or the indirect electromagnetic field generation device can be a nuclear energy generation device, a nuclear reactor device, or a nuclear waste device; nuclear radiation can generate an extremely strong electromagnetic field; by continuously cutting the electromagnetic field lines generated by the nuclear radiation with the coil, thus, induced current and induced electromotive force can be generated within the coil, and waste can be turned into treasure, continuously obtaining electrical energy.
